# EUROPEAN PATENT SPECIFICATION

(11) **EP 3 447 557 B1**
(45) Date of publication and mention of the grant of the patent: **20.11.2024**
(21) Application number: 16906184.3
(22) Date of filing: 30.12.2016
(51) Int. Cl.: G02B 6/44

(54) **FULL DRY TYPE BENDING-RESISTANT PIPELINE OUTPUT CABLE AND METHOD FOR MANUFACTURING SAME**
AUSGANGSKABEL FÜR VOLLSTÄNDIG TROCKENE BIEGEFESTE ROHRLEITUNG UND VERFAHREN ZUR HERSTELLUNG DAVON
CÂBLE DE SORTIE DE PIPELINE RÉSISTANT À LA FLEXION DE TYPE SEC COMPLET ET SON PROCÉDÉ DE FABRICATION

(30) Priority: 22.06.2016 CN 201610458173
(43) Date of publication of application: 27.02.2019
(73) Proprietor: Jiangsu Zhongtian Technology Co., Ltd., Nantong, Jiangsu 226463 (CN)
(72) Inventor: WANG, Chenshi, Nantong Jiangsu 226463 (CN); ZHOU, Hua, Nantong Jiangsu 226463 (CN); MIU, Weiwei, Nantong Jiangsu 226463 (CN); YOU, Xu, Nantong Jiangsu 226463 (CN)
(74) Representative: Zaboliene, Reda
(86) International application number: PCT/CN2016/113711
(87) International publication number: WO 2017/219647

(56) References cited:
- WO-A1-2015/142604
- CN-A- 103 616 749
- CN-A- 103 869 434
- CN-A- 103 926 665
- CN-A- 103 995 330
- CN-A- 104 570 250
- CN-A- 105 974 538
- CN-U- 202 330 807
- CN-U- 205 910 384
- US-A- 4 441 787
- US-A1- 2009 016 687
- US-A1- 2011 091 173
- US-A1- 2014 377 577
- US-B2- 8 275 225

## Description

The disclosure relates to optical cable containing optical fiber.

### BACKGROUND

Pipeline laying of ducted optical cables containing optical fiber as a signal transmission medium is widespread. The laying of pipeline below ground is less harsh than the open-air environment, and pipeline-laid transmission lines do not have to withstand extremes of cold and heat. However, the ducting must still have tensile strength, lateral compressive strength, bending resistance, and water blocking performance, etc., to meet construction requirements and adverse eventualities during normal operations.

The normal optical cable has reinforcing members such as steel wire, and is wrapped with water blocking tape. Steel tape can also be used, to form a traditional pipeline-laid optical cable. Although the structure of the traditional pipeline-laid optical cable has high tensile strength and lateral compressive strength, the water blocking performance is not good due to large gaps. The steel wire reinforcement can become a hazard, perhaps even a lightning conductor, even though electromagnetic interference does not affect signal transmissions in optical fiber. A redesign of the cable structure and a better reinforcing member is appropriate, so that the pipeline-laid optical cable is able to meet higher standards.

CN 103616749 A (ZHEJIANG SHIP ELECTRONICS & TECHNOLOGY CO., LTD, published on March 5, 2014) disclosed an optical cable comprises an optical fiber unit, a sheath layer, a first water blocking layer formed by twisting a high modulus water-resistance aramid, an inner protective layer, a second water blocking layer covering the inner protective layer, a second water blocking layer covering the inner protective layer, and an outer protective layer.

CN 2002330807 U (SHENZHEN SDG INFORMATION CO., LTD, published on July 11, 2012) disclosed an optical cable includes rip-cords to facilitate the opening of the cables different layers.

CN 104570250 A (JIANGSU ZHONGTIAN TECHNOLOGY CO., LTD, published on April 29, 2015) disclosed an optical cable includes a water blocking material comprising both a high modulus aramid and a water-resistance aramid to provide a water blocking function as well as tensile strength.

### SUMMARY

A fully waterproofed and semi-rigid pipeline-laid optical cable is disclosed. The pipeline-laid optical cable has the characteristics of high mechanical strength, good flexibility, and complete resistance to water penetration. Additionally, the pipeline-laid optical cable is able to be independently used, and be used for fiber joints and prefabricated ends, and be used as a wire jumper.

A manufacturing method for the fully waterproofed and semi-rigid pipeline-laid optical cable is also disclosed. The method significantly reduces internal gaps of the pipeline-laid optical cable to improve the water blocking performance, the tensile strength, lateral compressive strength, and semi-rigid properties of the pipeline-laid optical fiber are all enhanced.

The technical solution in this disclosure is as follows:
The manufacturing method of the fully waterproofed and semi-rigid pipeline-laid optical cable includes the following steps:
(a), producing a sheath layer,
   subjecting a tensionable pay-off rack for optical fiber to a tension test, the tension of the rack being adjusted if necessary to 0.8N-1N, then, selecting a ribbon merging die for extrusion molding of the sheath layer, an output diameter of the ribbon merging die being adjusted to 0.8 ±0.05mm, and a degree of vacuum in the ribbon merging die being adjusted for a peeling strength of 5.0-7.0N;
(b), producing a first water blocking layer,
   configuring a high modulus water-blocking aramid as a water blocking material of the first water blocking layer, a first cord being formed by one or more of fastening yarn, polyester yarn, and aramid cord, unwinding aramid cord directly from an aramid pay-off rack;
(c), producing an inner protective layer,
   unwinding an optical fiber with the sheath layer and the first water blocking layer made in previous steps by a tight tube optical fiber pay-off rack, a tension of such rack being adjusted to 3.0-5.0N. An extrusion die, tubular or otherwise, molds the inner protective layer at the outside of the first water blocking layer. A temperature for the extruding is set, temperature being 130-170 °C. After the extruding, an optical fiber which is coated with the inner protective layer passes through a hot water tank and then a cold water tank. The optical fiber is gathered on a reel by traction to form a cable unit;
(d), producing a second water blocking layer,
   selecting a high modulus aramid and a water blocking yarn as materials for making the second water blocking layer. A second cord is formed from one or more of fastening yarn, polyester yarn, and aramid cord. A tension of the aramid pay-off rack is kept close to a tension of the water blocking yarn, deviation does not exceed 0.5%. The aramid and the water blocking yarn are twisted into an "S" form at a pitch of 800-1000mm to form the second water blocking layer, the one or more of fastening yarn, polyester yarn, and aramid cord is placed straight at one side of the aramid.
(e), producing an outer protective layer,
   extruding, by an extrusion mold, an outer protective material on the outside of the cable unit covering the second water blocking layer to form the outer protective layer. The cable covered with the outer protective layer is then passed through the hot and cold water tanks. The processed cable, as the fully waterproofed and semi-rigid pipeline-laid optical cable, is pulled onto a reel by a traction wheel.

In step (b), a tension value input into the aramid pay-off rack is 1-1.5N or 5-6N.

In step (c), a diameter of the extrusion die is adjusted to be 3.0±0.1mm, a thickness of the inner protective layer is ≥0.4mm, and an extruding speed is 25-30 rounds per minute (r/min).

A tension value input into the tight tube optical fiber pay-off rack is 4-5N.

The inner protection layer is made of a low-smoke and halogen-free flame-retardant material. In step (c), a temperature of hot water tank is controlled to be at 20-30°C or 40-50°C, a temperature of the cold water tank is controlled to be at 15-20°C, a tension value of the traction wheel is 10-20N.

In step (d), a tension value of the aramid pay-off rack is 1-1.5N or 5-6N. The tension value applied to the fastening yarn, polyester yarn, and aramid cord is same as the tension value of the aramid pay-off rack.

An outer diameter of the outer protective layer is 5.0±0.1mm, a thickness of the outer protective layer is ≥0.4mm.

In step (e), an extrusion temperature is set at 170-220°C, an extrusion speed is 10-20r/min, and a tension value of cable unit is 15-20N. Temperature of the hot water tank is at 45-60°C, a temperature of the cold water tank is at 19-25 °C.

In step (e), a tension value of the traction wheel is 30-40N.

In step (c), a fiber redundancy is -8% - -10%.

In step (e), a fiber redundancy is -3% - -5%.

The disclosure enables the following benefits:

The fully waterproofed and semi-rigid pipeline-laid optical cable has a circular structure with two protective layers. The inner protective layer has high flame retardancy and low smoke factor. The outer protective layer is non-stretch, non-crushable, and has a high resistance to being bent. Compared with the traditional pipeline-laid optical cable, the outer diameter of the disclosed fully waterproofed and semi-rigid pipeline-laid optical cable is smaller than that of prior art, saving pipeline space. The fully waterproofed and semi-rigid pipeline-laid optical cable has two water blocking layers; the first water blocking layer is made of high modulus water-resistant aramid, and a first cord made of fastening yarn, or other polyester yarn, or aramid cord, is positioned in the first water blocking layer. The second water blocking layer is formed by twisting high modulus aramid and water blocking yarn at a pitch of 800-1000 mm. The double water blocking structure greatly improves water resistance. The fully waterproofed and semi-rigid pipeline-laid optical cable does not require a grease filling, making its use in construction projects more convenient. Since there is no metal reinforcement or steel/aluminum tape in the pipeline-laid optical cable, it is effectively lightning-proof and not subject to electrical surges. Such pipeline-laid optical cable is also suitable for medium-short span erection at high altitudes. A negative fiber-redundancy process allows the fully waterproofed and semi-rigid pipeline-laid optical cable to effectively resist shrinkage of the outer protective layer. Additionally, the manufacturing method reduces internal clearance of the pipeline-laid optical cable, improves water blocking performance, and enhances the tensile strength, crush-resistance, and bending resistance of the pipeline-laid optical cable.

### BRIEF DESCRIPTION OF DRAWING

A better understanding of the features and advantages of the present invention will be obtained by reference to the following detailed description and the accompanying drawing.

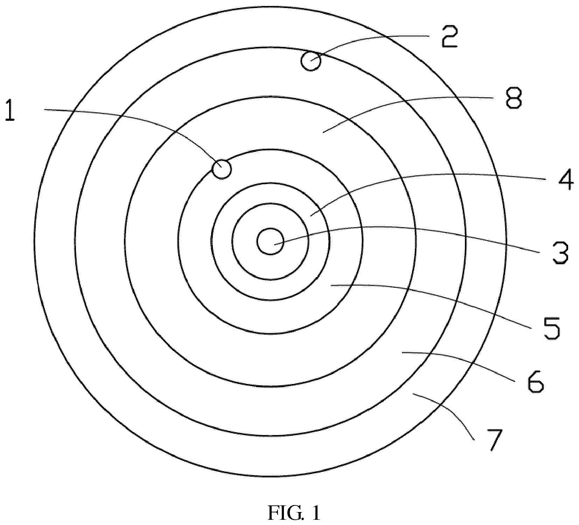

FIG. 1 is a schematic structural view of a fully waterproofed and semi-rigid pipeline-laid optical cable. The optical cable as such is not claimed.

### DETAILED DESCRIPTION

Detailed description of embodiments of the present invention will be given with reference to the accompanying drawing. A number of specific details are set forth to enable full understanding. The described embodiments are only a part of the possible embodiments and not all of them. All other embodiments obtained by those skilled in the art based on the instant embodiment without creative efforts are within the scope of the instant claims. The drawings are only for the purpose of illustration and description, and are not intended to be limiting. The dimensions shown are merely for the purpose of clarity of description.

Unless otherwise defined, all technical and scientific terms used herein have the same meaning as commonly understood by one skilled in the art. The terms used herein are only for describing specific embodiments, and are not intended to limit the present invention.

Referring to FIG. 1, a fully waterproofed and semi-rigid pipeline-laid optical cable includes an optical fiber unit 3, a sheath layer 4, a first water blocking layer 5, an inner protective layer 8, a second water blocking layer 6, and an outer protective layer 7. The fully waterproofed and semi-rigid pipeline-laid optical cable has a circular cross section. The first water blocking layer 5 is formed by twisting a high modulus water-resistant aramid. The second water blocking layer 6 covers the inner protective layer 8. A first cord 1 formed by fastening yarn is positioned in the first water blocking layer 5. The first water blocking layer 5 is positioned between the sheath layer 4 and the inner protective layer 8. The second water blocking layer 6 is formed by twisting a high modulus aramid and a water blocking yarn at a pitch of 800-1000 mm. A second cord 2 formed by fastening yarn is positioned in the second water blocking layer 6. The second water blocking layer 6 is positioned between the inner protective layer 8 and the outer protective layer 7.

The first cord 1 and the second cord 2 can be made of one or more of fastening yarn and polyester yarn.

A manufacturing method of the fully waterproofed and semi-rigid pipeline-laid optical cable includes following steps:
In step (a), achieving the sheath layer 4.

A prepared optical fiber tensionable pay-off rack is subjected to tension test. A tension of the optical fiber pay-off rack is adjusted to 0.8N-1N. Then, a ribbon merging die is selected for extrusion molding of the sheath layer 4. An output diameter of the ribbon merging die is adjusted to 0.8±0.05mm. A degree of vacuum in the ribbon merging die is adjusted, so that peeling strength of the sheath layer 4 is controlled at 5.0-7.0N.

In step (b), achieving the first water blocking layer 5.

A high modulus water-blocking aramid is used as a water blocking material of the first water blocking layer 5. The first cord 1 is formed by one or more of fastening yarn, other polyester yarn, and aramid cord. A tension of an aramid pay-off rack is adjusted to 1-1.5N.

In step (c), achieving the inner protective layer 8.

A tight tube optical fiber pay-off rack supplies an optical fiber with the sheath layer 4 from step (a), tension of the tight tube optical fiber pay-off rack is adjusted. The tension is adjusted to 3.0-5.0N. An extrusion die is used for extrusion molding the inner protective layer 8 at the outside of the first water blocking layer 5, and an extruding speed is set at 25-30r/min. A temperature for extruding the inner protective layer 8 is set, the temperature is controlled to be at 130-170 °C. An output diameter of the extrusion die is adjusted to 3.0±0.1mm. The inner protective layer 8 is extruded and formed outside the first water blocking layer 5, and a thickness of the inner protective layer 8 is greater than or equal to 0.4mm. The inner protective layer 8 is made of a low-smoke and halogen-free flame-retardant material. After extruding, an optical fiber coated with the inner protective layer 8 passes through a hot water tank and a cold water tank for cooling, to form a cable unit. A temperature of the hot water tank is controlled at 20-30 °C, and a temperature of the cold water tank is controlled at 15-20 °C. The cable unit is reeled in by a traction wheel.

In step (d), achieving the second water blocking layer 6.

The second water blocking layer 6 is made of the high modulus aramid and the water blocking yarn. The second cord 2 is formed by one or more of fastening yarn, other polyester yarn, and aramid cord. A tension of an aramid pay-off rack is adjusted to 1-1.5N. A tension of the aramid is kept close to that of the water blocking yarn, deviation does not exceed 0.5%. The aramid and the water blocking yarn are twisted in "S" at a pitch of 800-1000mm to form the second water blocking layer 6. The yarn is placed at one side of the aramid, being kept straight for easy tearing. Before producing the second water blocking layer 6, the aramid and water blocking yarn are pulled to a machine head for use. Then, a traction wheel is activated to a smooth speed and the yarn is brought to the machine head. The speed of twisting is set to bring the twisting pitch within the range of 800-1000mm.

In step (e), achieving the outer protective layer 7.

A diameter of the outer protective layer 7 is 5.0±0.1mm, and the diameter of the outermost layer (outer protective layer 7) is the outer diameter of the whole optical cable. A thickness of outer protective layer 7 is greater than or equal to 0.4mm. An appropriate extrusion mold for producing the outer protective layer 7 is selected according to the diameter of the outer protective layer 7. The mold is set, an extrusion temperature of the mold is at 170-220 °C, and an extrusion speed is 10-20r/min. After adjusting a diameter and a concentricity of the extrusion mold, a polyethylene outer sheathing material is extruded on the outside of a cable unit obtained in step (d) and covered with the second water blocking layer 6. Outer protective layer 7 is thus formed. The polyethylene outer sheathing material is an outermost protection. Then, cable covered with the outer protective layer 7 passes through a hot water tank with temperature of 45-60 °C and a cold water tank with temperature of 19-25 °C. The fully waterproofed and semi-rigid pipeline-laid optical cable is thus obtained. The fully waterproofed and semi-rigid pipeline-laid optical cable is reeled in by a traction wheel.

The various values and settings, particularly the numerical values, in above embodiments are merely illustrative of the invention, and are not intended to limit the scope thereof. Additionally, in actual applications, these values can also be adjusted according to actual conditions. For example, in step (b), the tension of the aramid pay-off rack is able to be 5-6N. In step (c), the tension of the tight tube optical fiber pay-off rack is able to be 4-5N, and the temperature of the hot water tank is able to be 40-50 °C. The tension of the traction wheel can be set at 10-20N. In step (d), the tension of the aramid pay-off rack is able to be 5-6N. The tension of the fastening yarn is able to be 5-6N, which is same as the tension of the aramid pay-off rack. In step (e), the tension of cable unit is 15-20N, the traction wheel is set at 30-40N. In other embodiments, the first cord 1 and the second cord 2 can also be made of other polyester. In step (c), an extrusion tubular die can also be used for extrusion molding of the inner protective layer 8. In step (d), fastening yarn, or other polyester yarn, is placed at one side of the aramid, and kept straight for easy tearing.

The fully waterproofed and semi-rigid pipeline-laid optical cable has a circular structure with two protective layers. The inner protective layer 8 has performance of high flame retardance and low smoke factor, and meets the temperature index of 280°C. The outer protective layer 7 is anti-stretch, anti-squash, and semi-rigid. Compared with the traditional ducting, the outer diameter of the fully waterproofed and semi-rigid pipeline-laid optical cable is smaller, saving installation space. The fully waterproofed and semi-rigid pipeline-laid optical cable has two water blocking layers. The first water blocking layer 5 is made of high modulus water-resistance aramid, and a first cord 1 made of fastening yarn, or other polyester yarn, or aramid cord, is positioned in the first water blocking layer 5. The second water blocking layer 6 is formed by twisting high modulus aramid and water blocking yarn at a pitch of 800-1000 mm. The structure of double water blocking layers improves water resistance. The fully waterproofed and semi-rigid pipeline-laid optical cable is fluid-free, with no grease filling, so is convenient for construction. The absence of metal reinforcement and steel/aluminum tape renders the fully waterproofed and semi-rigid pipeline-laid optical cable impervious to lightning and electromagnetic interference, and is also suitable for medium-short span erection in high-altitude. A fiber-redundancy process renders the fully waterproofed and semi-rigid pipeline-laid optical cable unshrinkable inside the outer protective layer 7. Additionally, the manufacturing method reduces internal clearances, improves the water blocking performance, and enhances the tensile strength, crush-resistance, and stiffness of the fully waterproofed and semi-rigid pipeline-laid optical cable.

It should be noted that the above embodiments are only used to illustrate specific aspect of the present invention, and are not limitations.

## Claims

1. A manufacturing method of a fully waterproofed and semi-rigid pipeline-laid optical cable, the manufacturing method comprising:
(a), producing a sheath layer (4),
subjecting a pay-off rack for optical fiber to a tension test, a tension of the rack being adjusted to 0.8N-1N, then, selecting a die for extrusion molding of the sheath layer (4), an output diameter of the die being adjusted to 0.8±0.05mm, and a degree of vacuum in the die being adjusted for a peeling strength at 5.0-7.0N;
(b), producing a first water blocking layer (5),
configuring a high modulus water-blocking aramid as a water blocking material of the first water blocking layer (5), forming a first cord (1) by one or more of fastening yarn and polyester yarn, the first cord (1) is positioned in the first water blocking layer (5);
(c), producing an inner protective layer (8),
unwinding an optical fiber with the sheath layer (4) made in the step (a) by a tight tube optical fiber pay-off rack, wherein a tension of the tight tube optical fiber pay-off rack is adjusted to 3.0-5.0N, an extrusion die, preferably a tubular extrusion die, molds the inner protective layer (8) at the outside of the first water blocking layer (5), a temperature for extruding is set, and the temperature is controlled at 130-170 °C, after extruding, the optical fiber which is coated with the inner protective layer (8) passes through a hot water tank and then a cold water tank for cooling, and the optical fiber is gathered on a reel by a traction wheel to form a cable unit;
(d), producing a second water blocking layer (6),
selecting a high modulus aramid and a water blocking yarn as materials for making the second water blocking layer (6), wherein a second cord (2) is formed from one or more of fastening yarn and polyester yarn, the second cord (2) is positioned in the second water blocking layer (6); a tension of an aramid pay-off rack is kept to be close to a tension of the water blocking yarn, deviation does not exceed 0.5%, the aramid and the water blocking yarn are twisted into an "S" form at a pitch of 800-1000mm to form the second water blocking layer (6), the second cord (2) is placed straight at one side of the aramid;
(e), producing an outer protective layer (7),
extruding, by an extrusion mold, an outer protective material at the outside of the cable unit covering the second water blocking layer (6) to from the outer protective layer (7), wherein the cable covered with the outer protective layer (7) then passes through a hot water tank and a cold water tank for cooling, and the processed cable, as the fully waterproofed and semi-rigid pipeline-laid optical cable, is pulled onto a reel by a traction wheel.

2. The manufacturing method of the fully waterproofed and semi-rigid pipeline-laid optical cable of claim 1, wherein, in step (b), a tension value of the aramid pay-off rack is 1-1.5N or 5-6N.

3. The manufacturing method of the fully waterproofed and semi-rigid pipeline-laid optical cable of claim 1, wherein, in step (c), an output diameter of the extrusion die or tubular is adjusted to 3.0±0.1mm, a thickness of the inner protective layer (8) is greater than or equal to 0.4mm, and an extruding speed is 25-30 rounds per minute (r/min).

4. The manufacturing method of the fully waterproofed and semi-rigid pipeline-laid optical cable of claim 1, wherein a tension value of the tight tube optical fiber pay-off rack is 4-5N.

5. The manufacturing method of the fully waterproofed and semi-rigid pipeline-laid optical cable of claim 1, wherein, the inner protective layer (8) is made of a low-smoke and halogen-free flame-retardant material; in step (c), a temperature of the hot water tank is controlled at 20-30°C or 40-50°C, a temperature of the cold water tank is controlled at 15-20°C, and a tension value of the traction wheel is 10-20N.

6. The manufacturing method of the fully waterproofed and semi-rigid pipeline-laid optical cable of claim 1, wherein, in step (d), a tension value of the aramid pay-off rack is 1-1.5N or 5-6N; and a tension value applied to the one or more of the fastening yarn and polyester yarn is the same as the tension value of the aramid pay-off rack.

7. The manufacturing method of the fully waterproofed and semi-rigid pipeline-laid optical cable of claim 1, wherein an outer diameter of the outer protective layer (7) is 5.0± 0.1mm, and a thickness of the outer protective layer is greater than or equal to 0.4mm.

8. The manufacturing method of the fully waterproofed and semi-rigid pipeline-laid optical cable of claim 1, wherein, in step (e), an extrusion temperature is set at 170-220°C, an extrusion speed is 10-20r/min, and a tension of the cable unit is 15-20N, a temperature of the hot water tank is at 45-60°C, and a temperature of the cold water tank is at 19-25°C.

9. The manufacturing method of the fully waterproofed and semi-rigid pipeline-laid optical cable of claim 1, wherein, in step (e), a tension value of the traction wheel is 30-40N.

## Patentansprüche

1. Verfahren zur Herstellung eines vollständig wasserdichten und halbstarren optischen Kabels, das in einer Pipeline verlegt wird, wobei das Verfahren umfasst:
(a), Herstellung einer Mantelschicht (4),
Unterziehen eines Abwickelgestells für optische Fasern einem Spannungstest, wobei die Spannung des Gestells auf 0,8 N bis 1 N eingestellt wird, dann Auswählen einer Düse zum Extrusionsformen der Mantelschicht (4), wobei der Ausgangsdurchmesser der Düse auf 0,8 ± 0,05 mm eingestellt wird und der Vakuumgrad in der Düse auf eine Abziehfestigkeit von 5,0 bis 7,0 N eingestellt wird;
(b), Herstellen einer ersten wassersperrenden Schicht (5),
Konfigurieren eines wasserdichten Aramids mit hohem Modul als ein wasserdichtes Material der ersten wassersperrenden Schicht (5), Bilden einer ersten Kordel (1) durch ein oder mehrere Befestigungs- und Polyestergarne, wobei die erste Kordel (1) in der ersten wassersperrenden Schicht (5) positioniert ist;
(c), Herstellen einer inneren Schutzschicht (8),
Abwickeln einer optischen Faser mit der in Schritt (a) hergestellten Mantelschicht (4) durch ein straffes Rohr-Abwickelgestell für optische Fasern, wobei eine Spannung des straffen Rohr-Abwickelgestells für optische Fasern auf 3,0-5,0 N eingestellt wird, eine Extrusionsdüse, vorzugsweise eine röhrenförmige Extrusionsdüse, die innere Schutzschicht (8) an der Außenseite der ersten wassersperrenden Schicht (5) formt, eine Temperatur zum Extrudieren eingestellt und die Temperatur auf 130-170 °C geregelt wird, nach dem Extrudieren die mit der inneren Schutzschicht (8) beschichtete optische Faser durch einen Heißwassertank und dann durch einen Kaltwassertank zum Abkühlen läuft und die optische Faser durch ein Antriebsrad auf einer Rolle aufgewickelt wird, um eine Kabeleinheit zu bilden;
(d), Herstellen einer zweiten wassersperrenden Schicht (6),
Auswahl eines hochmoduligen Aramids und eines wassersperrenden Garns als Materialien zur Herstellung der zweiten wassersperrenden Schicht (6), wobei eine zweite Kordel (2) aus einem oder mehreren Befestigungs-und Polyestergarnen gebildet ist, wobei der zweiten Kordel (2) in der zweiten wassersperrenden Schicht (6) positioniert ist;
eine Spannung eines Aramid-Abwickelgestells wird so gehalten, dass sie nahe an der Spannung des wassersperrenden Garns liegt, die Abweichung überschreitet nicht 0,5 %, das Aramid und das wassersperrende Garn werden in einer Steigung von 800-1000 mm in eine "S"-Form gedreht, um die zweite wassersperrende Schicht (6) zu bilden, wobei der zweite Kordel (2) gerade an einer Seite des Aramids platziert wird;
(e), Herstellen einer äußeren Schutzschicht (7),
Extrudieren eines äußeren Schutzmaterials an der Außenseite der Kabeleinheit, das die zweite wasserblockierende Schicht (6) bedeckt, mittels einer Extrusionsform, um die äußere Schutzschicht (7) zu bilden, wobei das mit der äußeren Schutzschicht (7) bedeckte Kabel dann zur Kühlung durch einen Warmwassertank und einen Kaltwassertank läuft, und das verarbeitete Kabel als vollständig wasserdichtes und halbstarres, in einer Pipeline verlegtes optisches Kabel durch ein Antriebsrad auf eine Rolle gezogen wird.

2. Das Herstellungsverfahren für das vollständig wasserdichte und halbstarre, in Rohrleitungen verlegte optische Kabel nach Anspruch 1, wobei in Schritt (b) ein Spannungswert des Aramid-Abwickelgestells 1-1,5N oder 5-6N beträgt.

3. Das Herstellungsverfahren für das vollständig wasserdichte und halbstarre, in einer Rohrleitung verlegte optische Kabel nach Anspruch 1, wobei in Schritt (c) ein Ausgangsdurchmesser der Extrusionsdüse oder des Rohrs auf 3,0 ± 0,1 mm eingestellt wird, eine Dicke der inneren Schutzschicht (8) größer oder gleich 0,4 mm ist und eine Extrusionsgeschwindigkeit 25-30 Umdrehungen pro Minute (U/min) beträgt.

4. Das Herstellungsverfahren für das vollständig wasserdichte und halbstarre, in Rohrleitungen verlegte optische Kabel nach Anspruch 1, wobei ein Spannungswert des Abwickelgestells für Glasfaserkabel mit dichtem Rohr 4-5N beträgt.

5. Das Herstellungsverfahren für das vollständig wasserdichte und halbstarre, in einer Pipeline verlegte optische Kabel nach Anspruch 1, wobei die innere Schutzschicht (8) aus einem raucharmen und halogenfreien flammhemmenden Material besteht; in Schritt (c) wird die Temperatur des Warmwassertanks auf 20-30 °C oder 40-50 °C geregelt, die Temperatur des Kaltwassertanks auf 15-20 °C geregelt und der Spannungswert des Antriebsrads beträgt 10-20 N.

6. Das Herstellungsverfahren für das vollständig wasserdichte und halbstarre, in Rohrleitungen verlegte optische Kabel nach Anspruch, wobei in Schritt (d) ein Spannungswert des Aramid-Abwickelgestells 1-1,5 N oder 5-6 N beträgt; und ein auf das Befestigungs- und/oder das Polyestergarn aufgebrachter Spannungswert derselbe ist wie der Spannungswert des Aramid-Abwickelgestells.

7. Das Herstellungsverfahren für das vollständig wasserdichte und halbstarre, in einer Pipeline verlegte optische Kabel nach Anspruch 1, wobei ein Außendurchmesser der äußeren Schutzschicht (7) 5,0 ± 0,1 mm beträgt und eine Dicke der äußeren Schutzschicht größer oder gleich 0,4 mm ist.

8. Das Herstellungsverfahren für das vollständig wasserdichte und halbstarre, in Rohrleitungen verlegte optische Kabel nach Anspruch 1, wobei in Schritt (e) eine Extrusionstemperatur auf 170-220 °C eingestellt wird, eine Extrusionsgeschwindigkeit 10-20 U/min beträgt und eine Spannung der Kabeleinheit 15-20 N beträgt, eine Temperatur des Warmwassertanks 45-60 °C beträgt und eine Temperatur des Kaltwassertanks 19-25 °C beträgt.

9. Das Herstellungsverfahren für das vollständig wasserdichte und halbstarre, in Rohrleitungen verlegte optische Kabel nach Anspruch 1, wobei in Schritt (e) ein Spannungswert des Antriebsrads 30-40N beträgt.

## Revendications

1. Procédé de fabrication d'un câble optique semi-rigide et entièrement étanche, posé sur un pipeline, comprenant les étapes suivantes ;
(a), la production d'une couche de gaine (4),
la soumission d'un support de déroulement pour fibre optique à un test de tension, une tension du support étant ajustée à 0,8 N-1 N, puis, la sélection d'une matrice pour le moulage par extrusion de la couche de gaine (4), un diamètre de sortie de la matrice étant ajusté à 0,8 ± 0,05 mm, et un degré de vide dans la matrice étant ajusté pour une résistance au pelage à 5,0-7,0 N ;
(b), la production d'une première couche de blocage d'eau (5),
la configuration d'un aramide bloquant l'eau à module élevé en tant que matériau bloquant l'eau de la première couche de blocage d'eau (5), la formation d'un premier cordon (1) par un ou plusieurs fils de fixation et fils de polyester, le premier cordon (1) est positionné dans la première couche de blocage d'eau (5) ;
(c), la production d'une couche protectrice interne (8),
le déroulement d'une fibre optique avec la couche de gaine (4) fabriquée à l'étape (a) par un support de déroulement de fibre optique à tube serré, dans lequel une tension du support de déroulement de fibre optique à tube serré est réglée à 3,0-5,0 N, une matrice d'extrusion, de préférence une matrice d'extrusion tubulaire, moule la couche protectrice interne (8) à l'extérieur de la première couche de blocage d'eau (5), une température pour l'extrusion est réglée, et la température est contrôlée à 130-170 °C, après l'extrusion, la fibre optique qui est revêtue de la couche protectrice interne (8) passe à travers un réservoir d'eau chaude puis un réservoir d'eau froide pour le refroidissement, et la fibre optique est rassemblée sur une bobine par une roue de traction pour former une unité de câble ;
(d), la production d'une seconde couche de blocage d'eau (6),
la sélection d'un aramide à module élevé et d'un fil bloquant l'eau comme matériaux pour fabriquer la seconde couche de blocage d'eau (6), dans lequel un deuxième cordon (2) est formé d'un ou plusieurs fils de fixation et de fils de polyester, le deuxième cordon (2) est positionné dans la deuxième couche de blocage d'eau (6) ;
une tension d'un support de déroulement d'aramide est maintenue proche d'une tension du fil de blocage d'eau, l'écart ne dépassant pas 0,5 %, l'aramide et le fil de blocage d'eau sont torsadés en forme de « S » à un pas de 800-1000 mm pour former la deuxième couche de blocage d'eau (6), le deuxième cordon (2) est placé directement sur un côté de l'aramide ;
(e), la production d'une couche protectrice externe (7),
l'extrusion, par un moule d'extrusion, un matériau de protection externe à l'extérieur de l'unité de câble recouvrant la seconde couche de blocage d'eau (6) pour former la couche de protection externe (7), dans lequel le câble recouvert de la couche protectrice externe (7) passe ensuite à travers un réservoir d'eau chaude et un réservoir d'eau froide pour le refroidissement, et le câble traité, en tant que câble optique posé sur canalisation entièrement étanche et semi-rigide, est tiré sur une bobine par une roue de traction.

2. Procédé de fabrication du câble optique posé sur pipeline entièrement étanche et semi-rigide selon la revendication 1, dans lequel, à l'étape (b), une valeur de tension du support de déroulement en aramide est de 1 à 1,5 N ou de 5 à 6 N.

3. Procédé de fabrication du câble optique posé sur pipeline entièrement étanche et semi-rigide selon la revendication 1, dans lequel, à l'étape (c), un diamètre de sortie de la matrice d'extrusion ou tubulaire est ajusté à 3,0 ± 0,1 mm, une épaisseur de la couche protectrice interne (8) est supérieure ou égale à 0,4 mm et une vitesse d'extrusion est de 25 à 30 tours par minute (r/min).

4. Procédé de fabrication du câble optique posé sur pipeline entièrement étanche et semi-rigide selon la revendication 1, dans lequel une valeur de tension du support de déroulement de fibre optique à tube étanche est de 4 à 5 N.

5. Procédé de fabrication du câble optique posé sur pipeline entièrement étanche et semi-rigide selon la revendication 1, dans lequel la couche protectrice interne (8) est constituée d'un matériau ignifuge à faible émission de fumée et sans halogène ; à l'étape (c), une température du réservoir d'eau chaude est contrôlée à 20-30 °C ou 40-50 °C, une température du réservoir d'eau froide est contrôlée à 15-20 °C, et une valeur de tension de la roue de traction est de 10-20N.

6. Procédé de fabrication du câble optique posé sur pipeline entièrement étanche et semi rigide selon la revendication, dans lequel, à l'étape (d), une valeur de tension du support de déroulement en aramide est de 1 à 1,5 N ou de 5 à 6 N ; et une valeur de tension appliquée à un ou plusieurs des fils de fixation et des fils de polyester est la même que la valeur de tension du support de déroulement en aramide.

7. Procédé de fabrication du câble optique posé sur pipeline entièrement étanche et semi-rigide selon la revendication 1, dans lequel un diamètre extérieur de la couche protectrice externe (7) est de 5,0 ± 0,1 mm, et une épaisseur de la couche protectrice extérieure est supérieure ou égale à 0,4 mm.

8. Procédé de fabrication du câble optique posé sur canalisation entièrement étanche et semi-rigide selon la revendication 1, dans lequel, à l'étape (e), une température d'extrusion est fixée à 170-220 °C, une vitesse d'extrusion est de 10-20 r/min, et une tension de l'unité de câble est de 15-20 N, une température du réservoir d'eau chaude est de 45-60 °C, et une température du réservoir d'eau froide est de 19-25 °C.

9. Procédé de fabrication du câble optique posé sur pipeline entièrement étanche et semi-rigide selon la revendication 1, dans lequel, à l'étape (e), une valeur de tension de la roue de traction est de 30 à 40 N.
